# EUROPÄISCHE PATENTSCHRIFT

(11) **EP 4 190 530 B1**
(45) Veröffentlichungstag und Bekanntmachung des Hinweises auf die Patenterteilung: **12.06.2024**
(21) Anmeldenummer: 22206676.3
(22) Anmeldetag: 10.11.2022
(51) Int. Cl.: B29C 48/285, B29C 48/50, B29C 48/68, B29B 7/60, B29B 7/42, B29B 7/74, B29K 21/00, B29K 83/00

(54) **ZUFÜHREINRICHTUNG FÜR DIE ZUFUHR VON KAUTSCHUK, INSBESONDERE FESTSILIKONKAUTSCHUK, IN Z. B. EINEN EXTRUDER**
FEEDING DEVICE FOR FEEDING RUBBER, PARTICULARLY SOLID SILICONE RUBBER, IN E.G. AN EXTRUDER
DISPOSITIF D'ALIMENTATION EN CAOUTCHOUC, EN PARTICULIER EN CAOUTCHOUC DE SILICONE SOLIDE, PAR EXEMPLE UNE EXTRUDEUSE

(30) Priorität: 01.12.2021 DE 102021131589
(43) Veröffentlichungstag der Anmeldung: 07.06.2023
(73) Patentinhaber: Universität Kassel, 34125 Kassel (DE)
(72) Erfinder: Giesen, Ralf-Urs, 34323 Malsfeld (DE); Heim, Hans-Peter, 33332 Gütersloh (DE); Klier, Kevin, 34323 Malsfeld (DE); Verheyen, Fabian, 34119 Kassel (DE)
(74) Vertreter: Walther Bayer Faber Patentanwälte PartGmbB

(56) Entgegenhaltungen:
- EP-A1- 3 693 150
- EP-A2- 3 332 940
- WO-A1-2020/173704
- US-A- 3 559 240
- US-A- 5 267 787

## Beschreibung

Die vorliegende Erfindung betrifft eine Zuführeinrichtung für die Zufuhr von Kautschuk, insbesondere Festsilikonkautschuk, als Strang- oder Ballenware in Aggregate mit Schneckenförderung, z. B. einen Extruder.

Zuführeinrichtungen der eingangs genannten Art sind aus dem Stand der Technik wie zum Beisoiel aus der EP 3 332 940 A2 und der US 3 559 240 A bekannt. Diese sind entweder mit einem Extruder verbunden oder aber sie münden in der Form eines Spritzgießwerkzeugs. So ist beispielsweise bekannt, Ballen aus Festsilikonkautschuk durch Stopfer in einen Zylinder zu pressen, in dem eine Schnecke läuft. Der Zylinder weist mindestens eine Düse auf, die in einem Extruder oder einem anderen Werkzeug mündet, das der Aufnahme der Ballenware dient.

Darüber hinaus ist eine Zuführeinrichtung bekannt, die einen Trichter umfasst, wobei der Trichter eine Öffnung aufweist, die der Aufnahme einer Schnecke dient, die den Transport der Kunststoffmasse (Kautschuk) durch die Öffnung besorgt. Es dreht sich hierbei nicht nur die Schnecke, sondern darüber hinaus auch der Trichter. Eine solche Vorrichtung zeigt beispielsweise die DE 4421 117 A1.

Des Weiteren gibt es Zuführeinrichtungen mit zwei Schnecken, auch Doppelschneckeninjektoren genannt. Die beiden Schnecken laufen mit ihren Längsachsen konisch aufeinander zu und fördern demzufolge konisch bzw. im Winkel zueinander stehend Material durch einen Trichter in den Bereich der Schnecke des Extruders.

Aus der EP 0 489 293 A1 wiederum ist ein Prinzip der Zuführung von Festsilikonkautschuk in den Bereich der Schnecke eines Extruders bekannt. Im Einzelnen sind hierbei eine Schnecke und eine Speisewalze vorgesehen, wobei Schnecke und Speisewalze gegensinnig zueinander vorliegen und parallel zueinander verlaufen. Die Schnecke ist hierbei Bestandteil des Extruders, wobei die Speisewalze der gesonderten Zufuhr des Kautschuks zur Schnecke der Extrudereinheit dient.

Auch gemäß der EP 3 453 508 A1 wird gelehrt eine Speisewalze parallel zu eine Schnecke anzuordnen, wobei die Speisewalze, die konisch oder auch zylindrisch ausgebildet sein kann, der Versorgung der Extruderschnecke mit Kautschuk dient.

Aus der US 4,117,548 ist eine Extrudereinheit bekannt, wobei auf der Extrudereinheit schornsteinartig eine Entlüftungseinheit angeordnet ist, wobei die Entlüftungseinheit eine Schnecke zur Kompression des zu entlüftenden Festsilikonkautschuks aufweist.

Eine weitere Möglichkeit Festsilikonkautschuk in das Spritzaggregat beispielsweise einer Spritzgießmaschine oder einen Extruder zu fördern, ist die Nutzung eines sogenannten Rotofeeder. Dieser Rotofeeder besteht aus einem Trichter, in dem sich die Schnecke befindet, wobei sich der Trichter um die Schnecke dreht. Hierdurch wird dann mit der entsprechenden Öffnung in Achse der Schnecke der Kautschuk gefördert. Eine Strangförderung beispielsweise beim Spritzgießen ist nicht möglich, da die Schnecke sich beim Spritzgießen translatorisch bewegt und den Strang im Einzug abtrennen würde.

Die der Erfindung zugrunde liegende Aufgabe besteht darin, eine Zuführeinheit der eingangs genannten Art bereitzustellen, die einfach und preiswert im Aufbau ist, insbesondere lediglich eines Antriebs bedarf und demzufolge auch nicht die Anordnung einer Speisewalze parallel zur Schnecke erforderlich ist.

Die Aufgabe wird erfindungsgemäß durch die Merkmale des Anspruchs 1 gelöst, wobei die Zuführeinrichtung ein Gehäuse umfasst. Das Gehäuse ist über seine Höhe mit einem zylindrischen Abschnitt und einen an den zylindrischen Abschnitt sich anschließenden konischen Abschnitt ausgebildet ist, wobei der zylindrische und der konische Abschnitt des Gehäuses eine einteilige Förderschnecke aufweisen, wobei die Förderschnecke im zylindrischen Abschnitt zylindrisch und im konischen Abschnitt konisch ausgebildet ist, wobei der konische Abschnitt mindestens zwei Auslassdüsen zur Verbindung mit einem Aggregat mit Schneckenförderung, z. B. der Schnecke eines Extruders oder einer Spritzgießmaschine, aufweist. Das Gehäuse ist somit nach Art eines Trichters ausgebildet, wobei die äußere Kontur der Förderschnecke in etwa der Kontur des jeweiligen Abschnitts des Gehäuses entspricht.

Der Kern der Erfindung besteht also darin, an einen zylindrischen Abschnitt einen konischen Abschnitt anschließen zu lassen und im zylindrischen wie im konischen Abschnitt entsprechend der Form des Gehäuses jeweils Schneckenstege als Bestandteile einer einzigen, einteiligen Schnecke vorzusehen, um hierdurch im zylindrischen Abschnitt eine Förderzone und im konischen Abschnitt eine Kompressionszone bereitzustellen.

Innerhalb der Kompressionszone findet eine Entlüftung und Verdichtung des Kautschuks, insbesondere des Festsilikonkautschuks statt. Im Bereich des konischen Abschnitts weisen die Schneckengänge bevorzugt eine höhere Steigung auf als im zylindrischen Abschnitt, was in Verbindung mit der Konizität des Abschnitts für eine höhere Verdichtung und damit eine bessere Entgasung bzw. Entlüftung der Kautschukmasse dient. Die Förderung der der Zuführeinrichtung zugeführten Kautschukmasse, z. B. als Ballenware, findet im zylindrischen Abschnitt des Gehäuses statt. Das heißt, in einem Werkzeug mit zwei Abschnitten findet sowohl die Entgasung als auch der Transport des Kautschuks statt.

Vorteilhafte Merkmale und Weiterbildungen der Erfindung ergeben sich aus den Unteransprüchen.

So ist insbesondere vorgesehen, dass die Wandung des Gehäuses kühlbar ist, um eine Vulkanisation des Kautschuks, insbesondere des Festsilikonkautschuks, während des Transports in der Zuführeinrichtung zu verhindern.

Des Weiteren ist vorgesehen, dass das Gehäuse nicht rotierbar ausgebildet ist, sondern ausschließlich die im Gehäuse angeordnete Förderschnecke rotiert, die den Festsilikonkautschuk sowohl fördert als auch, vor dem Hintergrund der Entgasung, verdichtet. Dies sorgt für eine einfache Bauweise.

Nach einem weiteren Merkmal der Erfindung ist vorgesehen, dass die mindestens zwei Auslassdüsen diagonal einander gegenüberliegend durch das Gehäuse aufnehmbar sind. Dies dient dazu zu verhindern, dass die Förderschnecke, wie dies bei lediglich einer Auslassdüse, die außermittig angeordnet ist, der Fall wäre, einseitig belastet wird. Eine einseitige Belastung würde dann auftreten, wenn eine vorgegebene Menge an Kautschukmasse nur durch eine und nicht durch zwei Düsen gepresst wird, da dann der Druck in einer Düse ansteigt und die Förderschnecke durch die einseitig aus der einen Düse austretende Masse als Gegendruck in eine Richtung gedrückt wird.

Nach einem weiteren Merkmal ist der zylindrische Abschnitt von dem konischen Abschnitt des Gehäuses durch mindestens ein Übergangselement unterteilt, wobei das Übergangselement mindestens zwei einander diagonal gegenüberliegende Öffnungen aufweist. Auch hier gilt aufgrund der symmetrischen Zuführung des Kautschuks, insbesondere des Festsilikonkautschuks, dass in dem konischen Gehäuseabschnitt keine einseitige Belastung der Förderschnecke stattfindet, wenn der Festsilikonkautschuk zu beiden Seiten der Förderschnecke die gleiche Kraft ausübt.

Nach einem weiteren Merkmal der Erfindung ist vorgesehen, dass im zylindrischen Abschnitt die Förderschnecke auf ihrem Umfang mindestens zwei Schneckenstege aufweist, es sich also bei dem zylindrischen Schneckenabschnitt um eine zweigängige Förderschnecke handelt, die dafür sorgt, dass insbesondere Ballenmaterial dem konischen Abschnitts des Gehäuses großvolumig zugeführt wird. Für die Förderschnecke im konischen Abschnitt sind insbesondere drei oder mehr Gänge vorgesehen, um eine höhere Verdichtung zu erreichen bzw. die Entgasung zu fördern.

Nach einem weiteren Merkmal der Erfindung ist das Gehäuse teilbar ausgebildet, mindestens in zwei Gehäusehälften, was die Reinigung der Zuführeinrichtung erleichtert.

Anhand der Zeichnung wird die Erfindung nachstehend beispielhaft näher erläutert.

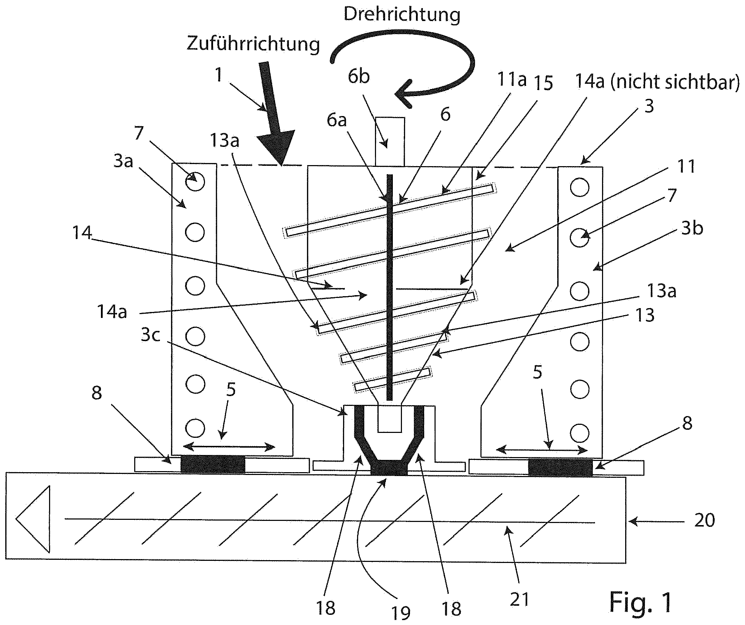

- Figur 1: zeigt die Zuführeinrichtung zusammen mit dem Aggregat mit Schneckenförderung in einer rein schematischen Darstellung;

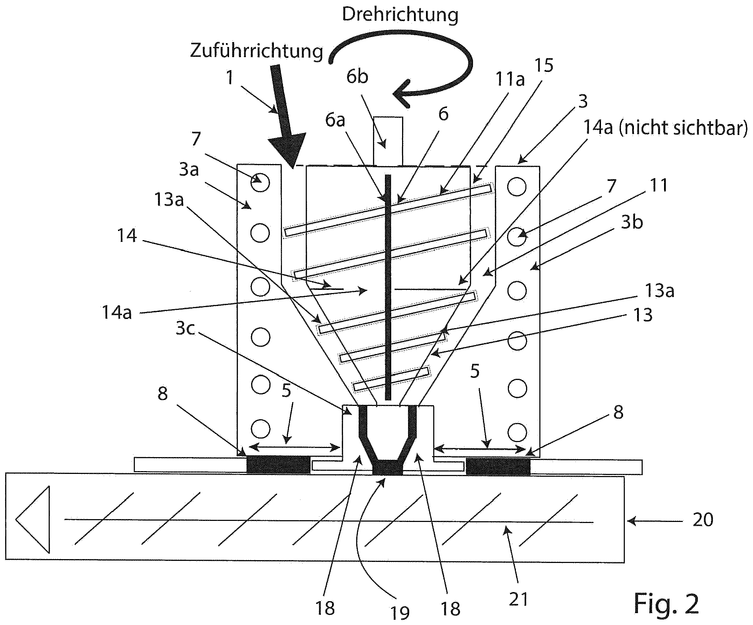

- Figur 2: zeigt die Zuführeinrichtung schematisch mit etwas zusammengefahrenen Gehäuseteilen.

Die Zuführeinrichtung 1 umfasst ein schematisch dargestelltes trichterförmiges Gehäuse 3, in dem sich die einteilige Förderschnecke 6 befindet. Das Gehäuse 3 in Trichterform weist zwei Gehäuseteile 3a, 3b auf, die relativ zueinander zur Bildung des Gehäuses 3 entsprechend der Pfeile 5 auf der Führungseinrichtung 8 verschieblich sind. Hierdurch wird Raum geschaffen, um die Zuführeinrichtung 1 leicht reinigen zu können.

Die Förderschnecke 6 besitzt eine angetriebene Welle 6a, wobei der Antrieb (schematisch dargestellt) das Bezugszeichen 6b aufweist. Einteilig ist die Förderschnecke 6 insofern, als eine einzige durchgehende Welle im zylindrischen wie im konischen Abschnitt entsprechend der zylindrischen und konischen Form der Abschnitte 11, 13 entsprechend ausgebildete Schneckengänge 11a, 13a aufweist. Die Schneckengänge 11a, 13a befinden sich auf einem Schneckenkörper 15. Der Schneckenkörper 15 weist entsprechend auch einen zylindrischen und einen konischen Abschnitt auf.

Das trichterförmige Gehäuse 3 mit den beiden Gehäuseteilen 3a, 3b weist zur Kühlung des Gehäuses Kühlschlangen 7 auf, die zur Kühlung mit einem Kühlmittel, z. B. Wasser, gefüllt werden.

Das Gehäuse 3 in Trichterform weist einen zylindrischen Abschnitt 11 und einen sich daran anschließenden konischen Abschnitt 13 auf, wobei der zylindrische Abschnitt 11 als Förderabschnitt bezeichnet werden kann, da die Schneckengänge 11a der Förderung des insbesondere ballenförmigen Kautschuks in den konischen Abschnitt 13 dienen. Der zylindrische Abschnitt ist in Bezug auf die äußere Kontur ähnlich einer Schiffschraube ausgebildet.

In dem konischen Abschnitt 13 findet die Verdichtung und Entgasung des Materials statt, wobei die Schneckengänge 13a des konischen Abschnittes 13 des Gehäuses 3 in Trichterform auch einen größeren Steigungswinkel aufweisen können als die Schneckengänge 11a im zylindrischen Abschnitt 11 des Gehäuses 3.

Unterteilt sind der zylindrische Abschnitt 11 und der konische Abschnitt 13 durch ein Übergangselement 14, das mindestens zwei diagonal einander gegenüberliegende Öffnungen 14a aufweist, um den durch die Schneckengänge 11a in der Förderschnecke 6 geförderte Kautschuk durch die mindestens zwei Öffnungen 14a des Übergangselements 14 in den konischen Abschnitt 13 zu transportieren. Durch das Übergangselement 14 wird der Kautschuk noch weiter verdichtet.

An den konischen Abschnitt 13 des Gehäuses 3 schließen sich die beiden einander diagonal gegenüberliegenden Düsen 18 an, die in einem gemeinsamen Düsengehäuse 19 zusammengeführt werden, wobei durch das Düsengehäuse 19 die Beschickung der Schnecke 21 des Aggregates 20, beispielsweise einer Spritzgießmaschine oder eines Extruders, erfolgt. Dadurch, dass die beiden Düsen 18 einander diagonal gegenüberliegend in dem Gehäuseteil 3c des trichterförmigen Gehäuses 3 lagern, wird die Förderschnecke 6 nicht einseitig belastet.

### Bezugszeichenliste:

- 1: Zuführeinrichtung
- 3: trichterförmiges Gehäuse
- 3a: erstes Gehäuseteil
- 3b: zweites Gehäuseteil
- 3c: Gehäuseteil
- 5: Pfeil
- 6: Förderschnecke
- 6a: Welle der Förderschnecke
- 6b: Antrieb der Förderschnecke
- 7: Kühlschlange
- 8: Führung für erstes und zweites Gehäuseteil
- 11: zylindrischer Abschnitt
- 11a: Schneckengänge des zylindrischen Abschnitts
- 13: konischer Abschnitt
- 13a: Schneckengänge des konischen Abschnitts
- 14: Übergangselement
- 14a: Öffnung im Übergangselement
- 15: Schneckenkörper
- 18: Düsen
- 19: Düsengehäuse
- 20: Aggregat mit Schneckenförderung
- 21: Schnecke des Aggregats

## Patentansprüche

1. Zuführeirichtung (1) für die Zufuhr von Kautschuk, insbesondere Festsilikonkautschuk, als Strang- oder Ballenware in Aggregate mit Schneckenförderung (20), z. B. einen Extruder, umfassend ein Gehäuse (3), wobei das Gehäuse (3) über seine Höhe einen zylindrischen Abschnitt (11) und einen an den zylindrischen Abschnitt (11) anschließenden konischen Abschnitt (13) aufweist,
wobei der zylindrische und der konische Abschnitt (11, 13) des Gehäuses (3) eine einteilige Förderschnecke (6) aufweisen, wobei im zylindrischen Abschnitt (11) die einteilige Förderschnecke (6) zylindrisch und im konischen Abschnitt (13) konisch ausgebildet ist, **dadurch gekennzeichnet, dass** der konische Abschnitt (13) mindestens zwei Auslassdüsen (18) zur Verbindung mit dem Aggregat mit Schneckenförderung (20) aufweist.

2. Zuführeinrichtung (1) nach Anspruch 1,
**dadurch gekennzeichnet,**
**dass** die Wandung der beiden Gehäuseteile (3a, 3b) des Gehäuses (3) kühlbar ist.

3. Zuführeinrichtung (1) nach einem der voranstehenden Ansprüche,
**dadurch gekennzeichnet,**
**dass** das Gehäuse (3) nicht rotierbar ausgebildet ist.

4. Zuführeinrichtung (1) nach einem der voranstehenden Ansprüche,
**dadurch gekennzeichnet,**
**dass** die mindestens zwei Auslassdüsen (18) diagonal einander gegenüberliegend durch das Gehäuse (3) aufnehmbar sind.

5. Zuführeinrichtung (1) nach einem der voranstehenden Ansprüche,
**dadurch gekennzeichnet,**
**dass** der zylindrische (11) und der konische Abschnitt (13) des Gehäuses (3) durch ein Übergangselement (14) unterteilt sind, wobei das Übergangselement (14) mindestens zwei einander diagonal gegenüberliegende Öffnungen (14a) aufweist.

6. Zuführeinrichtung (1) nach einem der voranstehenden Ansprüche,
**dadurch gekennzeichnet,**
**dass** die Förderschnecke (6) im Bereich des zylindrischen Abschnitts (11) auf ihrem Umfang mindestens zwei Schneckenstege (11a) aufweist.

7. Zuführeinrichtung (1) nach einem der voranstehenden Ansprüche,
**dadurch gekennzeichnet,**
**dass** im Bereich des konischen Abschnitts (13) des Gehäuses (3) die Förderschnecke (6) mindestens drei Schneckenstege (13a) aufweist.

8. Zuführeinrichtung (1) nach einem der voranstehenden Ansprüche,
**dadurch gekennzeichnet,**
**dass** das Gehäuse (3) in mindestens zwei Teile (3a, 3b) teilbar ausgebildet ist.

9. Zuführeinrichtung (1) nach einem der voranstehenden Ansprüche,
**dadurch gekennzeichnet,**
**dass** die Steigung der Schneckenstege (11a, 13a) in dem konischen Abschnitt (13) größer ist als im zylindrischen Abschnitt (11).

## Claims

1. A feed device (1) for the feed of rubber, in particular solid silicone rubber, as a strand product or bale product into units having screw conveying (20), e.g. an extruder, comprising a housing (3), wherein the housing (3) has a cylindrical section (11) over its height and a conical section (13) adjoining the cylindrical section (13),
wherein the cylindrical and conical sections (11, 13) of the housing (3) have a single-part screw conveyor (6),
wherein the single-part screw conveyor (6) is configured as cylindrical in the cylindrical section (11) and as conical in the conical section (13),
**characterized in that**
the conical section (13) has at least two outlet nozzles (18) for connection to the unit having screw conveying (20).

2. A feed device (1) in accordance with claim 1,
**characterized in that**
the wall of the two housing parts (3a, 3b) of the housing (3) is coolable.

3. A feed device (1) in accordance with one of the preceding claims,
**characterized in that**
the housing (3) is configured as non-rotatable.

4. A feed device (1) in accordance with one of the preceding claims,
**characterized in that**
the at least two outlet nozzles (18) can be received by the housing (3) diagonally opposite one another.

5. A feed device (1) in accordance with one of the preceding claims,
**characterized in that**
the cylindrical section (11) and the conical section (13) of the housing (3) are divided by a transition element (14), with the transition element (14) having at least two diametrically opposed openings (14a).

6. A feed device (1) in accordance with one of the preceding claims,
**characterized in that**
the screw conveyor (6) has at least two flights (11a) on its circumference in the region of the cylindrical section (11).

7. A feed device (1) in accordance with one of the preceding claims,
**characterized in that**
the screw conveyor (6) has at least three flights (13a) in the region of the conical section (13) of the housing (3).

8. A feed device (1) in accordance with one of the preceding claims,
**characterized in that**
the housing (3) is configured as divisible into at least two parts (3a, 3b).

9. A feed device (1) in accordance with one of the preceding claims,
**characterized in that**
the pitch of the flights (11a, 13a) is greater in the conical section (13) than in the cylindrical section (11).

## Revendications

1. Dispositif d'alimentation (1) destiné à l'alimentation d'unités dotées d'un système de transport à vis (20), par exemple une extrudeuse, en caoutchouc, en particulier en caoutchouc de silicone solide, sous la forme de cordon ou de balle, comprenant un carter (3), le carter (3) présentant, sur sa hauteur, un segment cylindrique (11) et un segment conique (13) dans le prolongement du segment cylindrique (11), le segment cylindrique et le segment conique (11, 13) du carter (3) présentant une vis sans fin (6) en une seule pièce, la vis sans fin (6) en une seule pièce étant réalisée cylindrique dans le segment cylindrique (11) et conique dans le segment conique (13), **caractérisé en ce que** le segment conique (13) présente au moins deux buses de sortie (18) destinées à la liaison avec l'unité dotée d'un système de transport à vis (20).

2. Dispositif d'alimentation (1) selon la revendication 1,
**caractérisé en ce que**
la paroi des deux parties de carter (3a, 3b) du carter (3) peut être refroidie.

3. Dispositif d'alimentation (1) selon l'une des revendications précédentes,
**caractérisé en ce que**
le carter (3) est réalisé de manière non rotative.

4. Dispositif d'alimentation (1) selon l'une des revendications précédentes,
**caractérisé en ce que**
les au moins deux buses de sortie (18) peuvent être logées diagonalement opposées l'une à l'autre dans le carter (3).

5. Dispositif d'alimentation (1) selon l'une des revendications précédentes,
**caractérisé en ce que**
le segment cylindrique (11) et le segment conique (13) du carter (3) sont subdivisés par un élément de transition (14), l'élément de transition (14) présentant au moins deux ouvertures (14a) diagonalement opposées l'une à l'autre.

6. Dispositif d'alimentation (1) selon l'une des revendications précédentes,
**caractérisé en ce que**
dans la zone du segment cylindrique (11), la vis sans fin (6) présente au moins deux crêtes de vis (11a) sur sa circonférence.

7. Dispositif d'alimentation (1) selon l'une des revendications précédentes,
**caractérisé en ce que**
dans la zone du segment conique (13) du carter (3), la vis sans fin (6) présente au moins trois crêtes de vis (13a).

8. Dispositif d'alimentation (1) selon l'une des revendications précédentes,
**caractérisé en ce que**
le carter (3) est réalisé de manière à pouvoir être divisé en au moins deux parties (3a, 3b).

9. Dispositif d'alimentation (1) selon l'une des revendications précédentes,
**caractérisé en ce que**
le pas des crêtes de vis (11a, 13a) dans le segment conique (13) est supérieur à celui du segment cylindrique (11).
